# EUROPEAN PATENT SPECIFICATION

(11) **EP 2 635 440 B1**
(45) Date of publication and mention of the grant of the patent: **10.01.2018**
(21) Application number: 11797355.2
(22) Date of filing: 01.11.2011
(51) Int. Cl.: B41F 23/04, B41F 33/00

(54) **DEVICE FOR IRRADIATING SUBSTRATE MATERIAL IN THE FORM OF A SHEET OR WEB AND USES THEREOF**
VORRICHTUNG ZUR BESTRAHLUNG EINES SUBSTRATMATERIALS IN FORM EINES BOGENS ODER EINER BAHN UND VERWENDUNGEN DAFÜR
DISPOSITIF POUR IRRADIER UN MATÉRIAU DE SUBSTRAT SOUS LA FORME D'UNE FEUILLE OU D'UNE BANDE ET SES UTILISATIONS

(30) Priority: 02.11.2010 EP 10189740
(43) Date of publication of application: 11.09.2013
(73) Proprietor: KBA-NotaSys SA, 1000 Lausanne 22 (CH)
(72) Inventor: SCHAEDE, Johannes, Georg, 97074 Wurzburg (DE)
(74) Representative: Koenig & Bauer AG
(86) International application number: PCT/IB2011/054846
(87) International publication number: WO 2012/059861

(56) References cited:
- WO-A1-2004/008398
- WO-A1-2005/008605
- WO-A2-2005/104045
- DE-A1-102008 042 394
- US-A1- 2010 242 299

## Description

### TECHNICAL FIELD

The present invention generally relates to a device for irradiating substrate material in the form of a sheet or web in a sheet-fed or web-fed processing system, especially in a sheet-fed or web-fed processing or printing press. The present invention further relates to applications of such a device as light source for illuminating the substrate material, especially in the context of the inspection of the quality and/or integrity of the substrate material, or as drying or curing element for drying or curing inks, varnishes, coatings and the like applied on the substrate material.

In the context of the present invention, the term "irradiating" shall be understood as referring to the act of irradiating or illuminating an object (here substrate material) with radiation of a desired wavelength or wavelength band within a portion of the electromagnetic spectrum ranging from ultraviolet (UV) radiation to infrared (IR) radiation, i.e. a spectrum comprising the visible light spectrum as well as the neighbouring infrared and ultraviolet bands.

### BACKGROUND OF THE INVENTION

A variety of irradiating devices are used in sheet-fed or web-fed processing systems, especially in sheet-fed or web-fed processing or printing presses. This in particular includes light sources for illuminating the substrate material with visible or near-visible light or specific UV or IR wavelength suitable for the inspection as well as drying or curing elements which are typically operating in the ultraviolet (UV) spectrum or infrared / near infrared (IR / NIR) spectrum.

International publication No. WO 03/052394 A1 (see also corresponding US Patents No. US 7,215,427 B2 and US 7,659,984 B2) for instance discloses a device for controlling the quality of substrate material comprising a rotating drum or cylinder with a transparent cylindrical casing for supporting sheets to be inspected and wherein a light source is disposed inside the transparent cylindrical casing, a camera being located outside of the transparent cylindrical casing to capture an image of a sheet being supported on the rotating drum or cylinder and illuminated by the light source. This device is in particular used to carry out a so-called transmissive inspection of the sheets. Sheet-fed processing systems making use of such a device are further described in International Publications Nos. WO 2005/008605 A1 (see also US Publications Nos. US 2006/0213384 A1 and US 2009/0003656 A1), WO 2005/008606 A1 (see also US Publication No. US 2006/0208412 A1), and WO 2005/104045 A2 (see also US Publication No. US 2007/0274567 A1). Manufacturing of the above-described device comprising the transparent cylindrical casing is however rather costly. The transparent casing, which can for instance be made of a transparent polycarbonate material, must furthermore conform to a precise cylindrical shape, which is only achievable with strict manufacturing requirements.

Transmissive inspection can also be carried out in a sheet-fed processing system as described in European Publication No. EP 0 559 616 A1 (see also US Patent No. US 5,368,148). Another solution is further described in International Publication No. WO 01/85457 A1 (see also US Patents Nos. US 7,096,784 B2 and US 7,273,008 B2). These solutions are however likewise relatively complex and costly to manufacture as one has to ensure a proper support of the sheets being inspected. Yet another example is described in European Publication No. EP 0 668 577 A1 (see also US Patent No. US 5,598,006).

The light sources used in the above examples are typically lighting tubes or conventional lamps which are designed to produce an as homogeneous as possible illumination of the substrate material. It has also been proposed to use LEDs (light-emitting devices) as light sources, as for instance discussed in International Publication No. WO 2005/093395 A1 (see also US Patent No. US 7,682,040 B2).

DE 10 2008 042 394 A1 discloses a sheet-processing machine, such as a sheet-fed printing press, comprising a blowing unit located in a delivery section of the sheet-processing machine, which blowing unit is used to facilitate and assist the delivery of the processed sheets onto the delivery pile of the delivery section. According to DE 10 2008 042 394 A1, the blowing unit further integrates an illumination device for illuminating the upper side of the sheets, thereby providing the ability to an operator to visually see and monitor the sheets being delivered onto the delivery pile. More precisely, the blowing unit consists of a plurality of blowing tubes whose lower portion is designed to be transparent (which portion is for instance made of glass) and with which lighting elements are located for illuminating the sheets. Such lighting elements are discrete SMD (surface mount device) lighting elements, such as LED or OLED diode elements, mounted on a circuit board located inside the at least partially transparent blowing tubes. The illuminating device of DE 10 2008 042 394 A1 thus consists of a number of juxtaposed discrete lighting elements which are assembled and mounted in a rigid manner in the sheet-processing machine.

Drying or curing elements are known which typically make use of infrared or ultraviolet lamps or like light sources. A solution making use of a laser beam source is also known from European Publication No. EP 0 355 473 A2 (see also US Patents Nos. US 4,991,506 and US 5,115,741).

Drying or curing elements making use of LED devices are also known, as discussed for instance in European Publication No. EP 2 067 620 A2 (see also US Publication No. US 2009/0148620 A1) and US Patent Publication No. US 2010/0242299 A1.

German Publication DE 10 2007 040 139 A1 discloses a solution wherein drying or curing elements, such as LED elements, are integrated in a rotating drum to dry or cure inks, varnishes, coatings and the like applied on sheets while the sheets are being transported between successive printing units.

All of the above described solutions are however relatively complicated and expensive to produce and to integrate into sheet-fed or web-fed processing systems such as sheet-fed or web-fed processing or printing presses.

There is therefore a need for a more simple and cost-efficient solution.

### SUMMARY OF THE INVENTION

A general aim of the invention is therefore to improve the known irradiation devices.

More particularly, an aim of the present invention is to provide a solution that is both simple and cost-efficient to integrate in a sheet-fed or web-fed processing system.

A more specific aim of the present invention is to provide a solution that is suitable for use as light source in a sheet-fed or web-fed processing system and, more particularly, in the context of the inspection of the quality and/or integrity of the substrate material, especially for transmissive inspection of the substrate material.

Still another specific aim of the present invention is to provide a solution that is also suitable for use as drying or curing element in a sheet-fed or web-fed processing system for drying or curing inks, varnishes, coatings and the like applied on the substrate material.

These aims are achieved thanks to a device for irradiating substrate material in the form of a sheet or web according to the present invention as defined in claim 1 and to the use of said device as light source for the inspection of the quality and/or integrity of the substrate material according to the present invention as defined in claim 13. There is accordingly provided a device for irradiating substrate material in the form of a sheet or web in a sheet-fed or web-fed processing system, especially in a sheet-fed or web-fed processing or printing press, wherein the device comprises at least one flexible light-emitting sheet for producing radiation of a desired wavelength or wavelength band, which flexible light-emitting sheet is disposed along a path of the substrate material to subject the substrate material to said radiation.

Within the context of the present invention, the expression "flexible light-emitting sheet" shall be understood as referring to a light-emitting device whose geometry and configuration are such that it is thin in comparison to its length and breadth, and which exhibits a sufficient flexibility to be shaped and/or to conform to a variety of desired shapes or curvatures, along and following the path of the substrate material.

Preferably, the flexible light-emitting sheet is an OLED sheet. Such an OLED sheet advantageously comprises one or more layers or films of organic materials situated between two electrode sheets and forming a single flexible sheet element.

An advantage of the use of a light-emitting sheet resides in the fact that such light-emitting sheet exhibits a substantially uniform and homogeneous light-emitting surface.

Advantageous embodiments of the invention form the subject-matter of the dependent claims and are discussed below.

### BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:
Figure 1 is a schematic illustration of a light-emitting sheet in the form of a bi-layer OLED (organic light-emitting device) sheet;
Figures 2A is a schematic illustration of an inspection system making use of a flexible light-emitting sheet as light source for transmissive inspection according to a first embodiment of the invention ; and
Figure 2B is an enlarged view of the inspection drum or cylinder of the inspection system of Figure 2A comprising the flexible light-emitting sheet;
Figure 3 is a schematic illustration of an inspection system making use of a flexible light-emitting sheet as light source for transmissive inspection according to another embodiment of the invention ;
Figure 4 is a schematic illustration of an inspection system making use of a flexible light-emitting sheet as light source for transmissive inspection according to yet another embodiment of the invention ;
Figure 5 is a schematic illustration of an inspection system making use of a flexible light-emitting sheet as light source for transmissive inspection according to a further embodiment of the invention ;
Figure 6a is a schematic illustration of a drying or curing system making use of a flexible light-emitting sheet as drying or curing element according to an additional embodiment of the invention ;
Figure 6b is a schematic illustration of a variant of the drying or curing system of Figure 6a ; and
Figure 7 is a schematic illustration of a sheet-fed printing press making uses of flexible light-emitting sheets as drying or curing elements according to a supplemental embodiment of the invention.

### DETAILED DESCRIPTION OF EMBODIMENTS OF THE INVENTION

The present inventor has generally recognized that light-emitting sheets could be conveniently used in the context of a sheet-fed or web-fed processing systems, such as a sheet-fed or web-fed processing or printing press, to potentially act as (i) light source for illumination of the substrate material processed on the sheet-fed or web-fed processing system, and/or (ii) as drying or curing element for drying or curing inks, varnishes, coatings and the like applied on substrate material.

OLED elements, and especially OLED sheets, are in particular very advantageous for such purposes. The acronym "OLED" is understood to designate an organic light-emitting device element. An OLED element basically comprises an emissive electroluminescent layer that is made of a film of organic compounds which emit light in response to an electric current. This layer of organic semiconductor material is situated between two electrodes. Generally, at least one of these electrodes is transparent. OLED elements are typically used in televisions screens, computer monitors, small portable screens such as found on mobile phones and PDAs, watches, advertising, information and indication. OLEDs are also used as light sources for general space illumination and in large-area light-emitting elements.

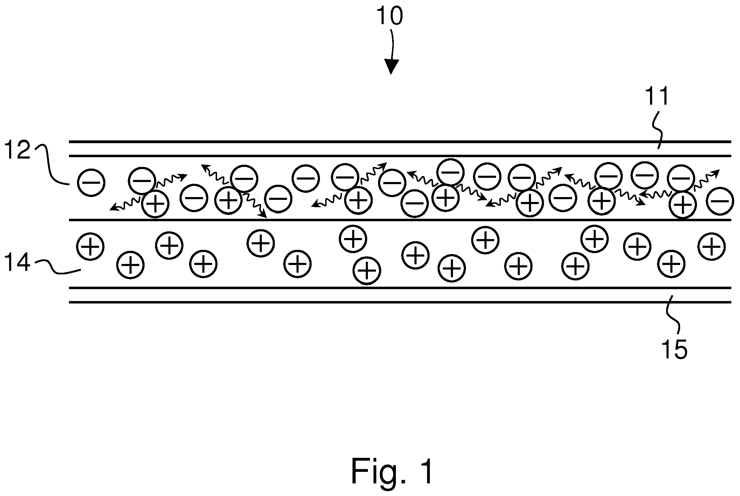

Figure 1 is a schematic illustration of a cross-section of a typical OLED sheet designated generally by reference numeral 10. An OLED sheet generally consists of one or more layers or films of organic materials situated between two electrode sheets, forming a cathode (-) and an anode (+), at least one of which is transparent. The illustration of Figure 1 shows a so-called bi-layer OLED comprising a cathode 11, an emissive layer 12, a conductive layer 14, and an anode 15, which are all typically deposited one on top of the other on a substrate (not shown), such as a glass or polymer substrate.

A voltage is applied across the electrodes such that a current of electrons flows through the OLED sheet 10 from the cathode 11 to the anode 15. As electrons are injected at the cathode 11 and withdrawn at the anode 15, electrons are withdrawn from the conductive layer 14 and injected into the emissive layer 12. As a result of the recombination of electrons and electron holes in the emissive layer 12, visible radiation is produced (and possibly radiation in the near-visible spectrum, e.g. in the infrared (IR) and/or ultraviolet (UV) spectrums). Either the cathode 11 or the anode 15 (or both) can be transparent thereby allowing the radiation to propagate. The whole OLED sheet 10 (and substrate over which the OLED sheet is typically formed) can suitably be designed to be flexible.

OLED sheets have the main advantages that a substantially homogeneous illumination can be generated over the whole surface of the light-emitting sheet and with relatively low power consumption. The thin, and advantageously flexible, nature of the OLED sheets also makes this solution very adequate for integration in sheet-fed or web-fed processing systems as this will be described below.

A number of possible embodiments of the invention will be described hereinafter in greater detail.

One will first talk about a first advantageous use and application of the invention, namely the use of a flexible light-emitting sheet in a sheet-fed or web-fed processing system as light source for illuminating the substrate material. It is especially contemplated to make use of an OLED sheet as the flexible light-emitting sheet, even though other equivalent technologies could be envisaged.

The below-described embodiments are suitable for use in a sheet-fed or web-fed processing or printing press, in particular and advantageously as light source for the inspection of the quality and/or integrity of the substrate material.

A preferred embodiment that is contemplated is the use of the flexible light-emitting sheet as light source for transmissive inspection of the substrate material. "Transmissive inspection" shall be understood to refer to the inspection of the quality and/or integrity of the substrate material involving a control of the transmissive properties of the substrate material. Such transmissive inspection is in particular carried out for the purpose of detecting possible defects in the substrate material itself (such as holes, torn portions, folds, etc.), defects in relation to features embedded or otherwise provided in the substrate material (such as security threads, micro-perforations, windows, watermarks, etc.), as well as possible print defects (missing ink patterns, recto-verso mis-registration, etc.). Banknotes and like security documents are for instance typically subjected to transmissive inspection, usually in addition to inspection of the recto and/or verso side(s) of the substrate material which is carried out under reflected light.

Transmissive inspection requires the light source to be disposed on the opposite side of the substrate material with respect to the sensing equipment such that the sensing equipment can suitably capture the relevant transmissive features of the substrate material.

White light can be used for the purpose of illuminating the substrate material. Radiation in the infrared (IR) or near-infrared (NIR) could also be used in addition to or in lieu of white light, especially in case where one wishes to additionally inspect features that are provided on or within the substrate material and which are responsive to such radiation by being either absorbent or transmissive to the radiation.

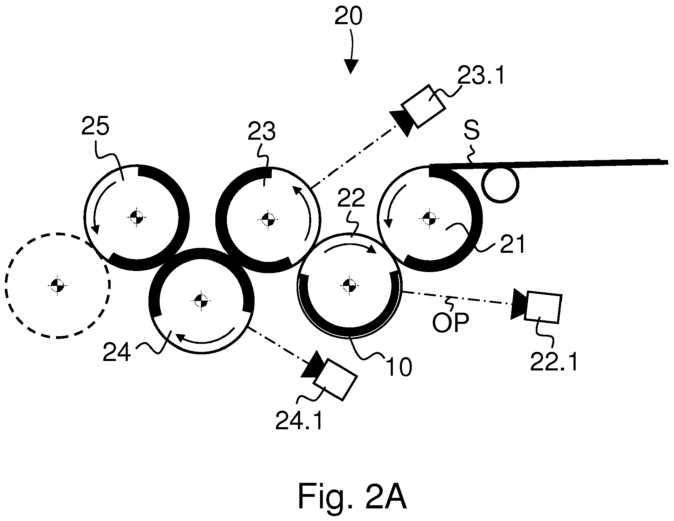

Figure 2A illustrates a possible example of a sheet inspection system, generally designated by reference numeral 20, comprising multiple processing drums or cylinders 21-25 that cooperate with one another for the purpose of carrying out inspection of the quality and/or integrity of individual sheets S. The sheet inspection system 20 of Figure 2A is designed in this particular example to carry out transmissive inspection of the sheets S as well as reflective inspection of the recto and verso sides of the sheets S.

As far as the arrangement of the drums or cylinders 21-25 is concerned, the configuration of the sheet inspection system 20 of Figure 2A is substantially similar to the configuration disclosed in International Publication No. WO 2005/104045 A2 which has already been referred to in the preamble hereof. It comprises a first (input) transfer drum or cylinder 21 which receives substrate material in the form of individual sheets S from a suitable sheet transport or feeding system (which is partly illustrated in Figure 2A but not referenced) located upstream of the first transfer drum or cylinder 21. The first transfer drum or cylinder 21 transports the sheets S in succession to a first inspection drum or cylinder 22. Sheets S are inspected while being transported on the first inspection drum or cylinder 22 and then transferred successively to a second inspection drum or cylinder 23 and to third inspection drum or cylinder 24 where additional inspections are carried out. Once inspected on the third inspection drum or cylinder 24, the fully-inspected sheets S are then transferred to a second (output) transfer cylinder 25 which ensures proper transport and transfer of the sheets S to the downstream-located system (not shown), such as a processing or printing unit or a delivery unit where the sheets S are sorted between good and bad sheets (i.e. sheets having a defect).

The sheets S are transported through the inspection system 20 along the circumference of the successive drums or cylinders 21-25 which are driven into rotation as shown by the arrows in Figure 2A. While this is not specifically illustrated in the drawings, each drum or cylinder 21-25 typically comprises its own set of grippers located in a corresponding pit of the drum or cylinder for holding a leading edge of the sheets, such gripper arrangement being typical in the art of rotary sheet-processing systems.

A similar arrangement in the case of web-processing would comprise inspection stations distributed along the path of the web between paper guiding elements. In this case the inspection stations may be designed as freely-locatable elements along the web, or like drums or rollers, guiding the web through the respective inspection station.

The first inspection drum or cylinder 22 is designed in the example of Figure 2A to carry out transmissive inspection of the sheets S, while the second and third inspection drums or cylinders 23, 24 are respectively designed to carry out reflective inspection of the recto (or front) side and verso (or back) side of the sheets S. Cameras 22.1, 23.1, 24.1, such as line-scan black-and-white or colour cameras comprising CCD or CMOS linear sensors, are further associated to each inspection drum or cylinder 22, 23, 24 to suitably acquire an image of the sheet to be inspected while it is being transported on the corresponding drum or cylinder. Illumination units (not shown) could be provided to suitably illuminate the portion of the side of the sheet which is being inspected by the cameras 23.1 and 24.1 on the second and third inspection drums or cylinders 23, 24.

Transmissive inspection could equally be carried out on the third inspection drum or cylinder 24, in which case the verso side of the sheets S would be inspected on the first inspection drum or cylinder 22 (see for instance International Publication No. WO 2005/008605 A1 already referred to in the preamble hereof).

In contrast to the known solutions for transmissive inspection which make use of an inspection drum or cylinder comprising a transparent cylindrical casing, the first inspection drum or cylinder 22 of this embodiment of the invention does not require any transparent cylindrical casing, nor does it require any light source to be located inside such a casing.

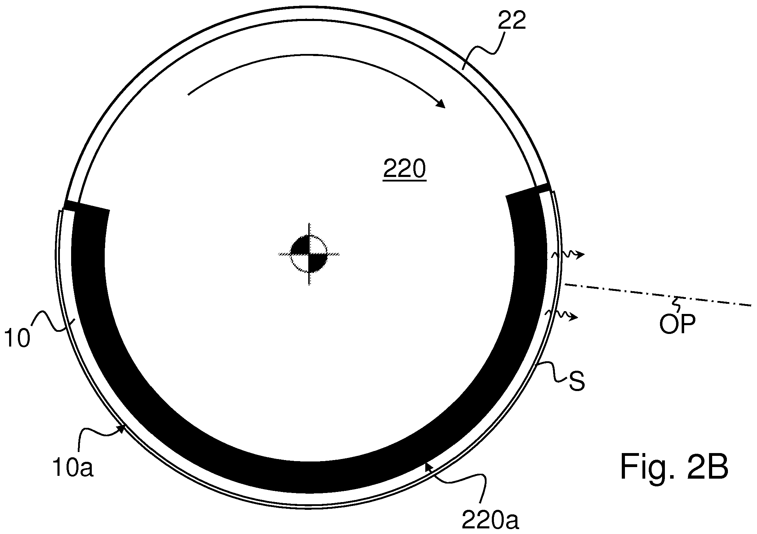

According to this embodiment of the invention, the first inspection drum or cylinder 22 can be designed in a manner substantially similar to the other inspection drums or cylinders 23, 24. More precisely, as shown in Figure 2B which shows an enlarged view of the first inspection drum or cylinder 22 where the image of the sheet S to inspect is acquired by the associated camera 22.1 (which camera 22.1 is not visible in Figure 2B but whose optical path OP is indicated by the dash-dot line), a flexible light-emitting sheet 10 is interposed between the outer circumferential surface 220a of a cylindrical body 220 and the sheet S. The cylindrical body 220 and flexible light-emitting sheet 10 together form the first inspection drum or cylinder 22. Multiple cameras (e.g. multiple line-scan cameras) could be associated to one and the same inspection drum or cylinder 22, should this be useful or necessary, for instance with a view to capture an image with sufficient noise-to-signal distance.

The flexible light-emitting sheet 10 can simply be wrapped around the cylindrical body 220 or applied onto a rigid supporting element conforming to the curvature of the cylindrical body 220. OLED sheets are again ideally suited for this purpose.

In this example, it is to be appreciated that the inspection cylinder or drum 22 forms a supporting element that acts as guide and support for the substrate material. More precisely, the supporting element is embodied in this example as a rotating drum or cylinder 22 for supporting the sheet S over the entire portion thereof.

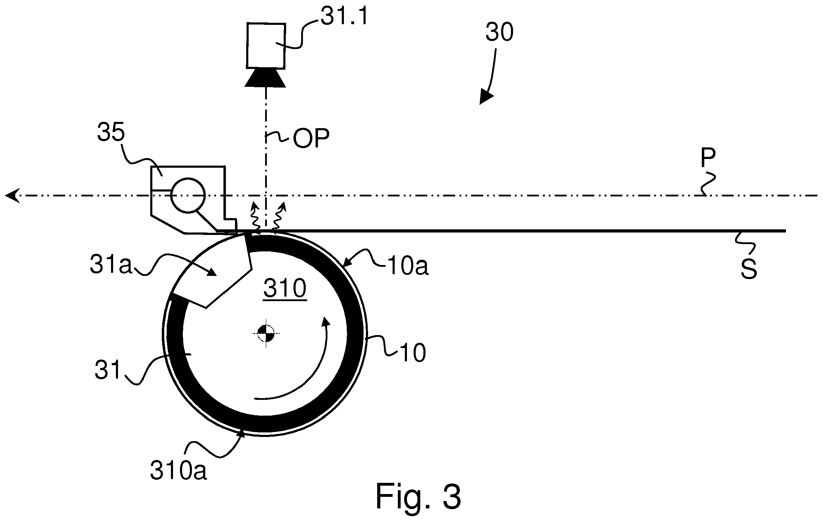

It is however to be appreciated that the rotating drum or cylinder could alternatively support the substrate material over only a portion thereof. Such an example is schematically illustrated in Figure 3, where one can identify an inspection system 30 comprising a rotating drum or cylinder 31 that is located next to the path P of grippers 35 of a conventional sheet gripper system, which grippers 35 hold successive sheets S by a leading edge thereof (only one sheet and one set of grippers being shown in Figure 3). Such grippers 35 are typically mounted on so-called gripper bars driven by endless chains, there being a plurality of such gripper bars distributed at constant intervals along the chains. Rotation of the drum or cylinder 31 is synchronised with the passage of the grippers 35 to ensure support of the sheet S during inspection. The rotating drum or cylinder 31 is designed in a manner similar to the inspection drum or cylinder 22 of Figures 2A-B (with the main difference that the drum or cylinder 31 is not provided with any grippers) and comprises a cylindrical body 310 having an outer circumferential surface 310a over which the flexible light-emitting sheet 10 is disposed. An opening, or pit, 31a is provided along the circumference of the cylindrical body 310 to accommodate the grippers 35. Reference numeral 31.1 designates a suitable line-scan camera (similar to cameras 22.1, 23.1, 24.1 of Figures 2A-B), such as a black-and-white or colour camera comprising a CCD or CMOS linear sensor (or like image sensor), for acquiring an image of the sheet S by line-scanning image acquisition. In this example, only a portion of the sheet S is supported at a given point in time by the circumference of the rotating drum or cylinder 31 in front of the optical path OP of the camera 31.1, thereby ensuring that the sheet S is properly resting against a reference surface during inspection.

As schematically shown in Figures 2B and 3 (this equally applies to the other embodiments), the sheet S could be supported directly against the upper surface 10a of the flexible light-emitting sheet 10. Alternatively, a protective layer (not shown) could be provided on top of the flexible light-emitting sheet 10 for the purpose of protecting the light-emitting sheet, especially from wear, scratches, etc., which could negatively affect the performance of the light-emitting sheet 10 over time. In such a case, the light-emitting sheet 10 would support the substrate material indirectly and would not come into direct contact with the substrate material. While this protective layer could be an integral part of the flexible light-emitting sheet 10 (and be provided at the time of the manufacture of the light-emitting sheet 10), it is preferable to provide a separate protective layer (such as in the form of a protective transparent sheet) which can readily be replaced and exchanged without this requiring a dismantling of the whole light-emitting sheet 10, thereby saving valuable maintenance time and costs.

While a rotating drum or cylinder is used as supporting element for the substrate material in the embodiment of Figures 2A-B and 3, any other suitable type of supporting element can be used to guide and support the substrate material during transport.

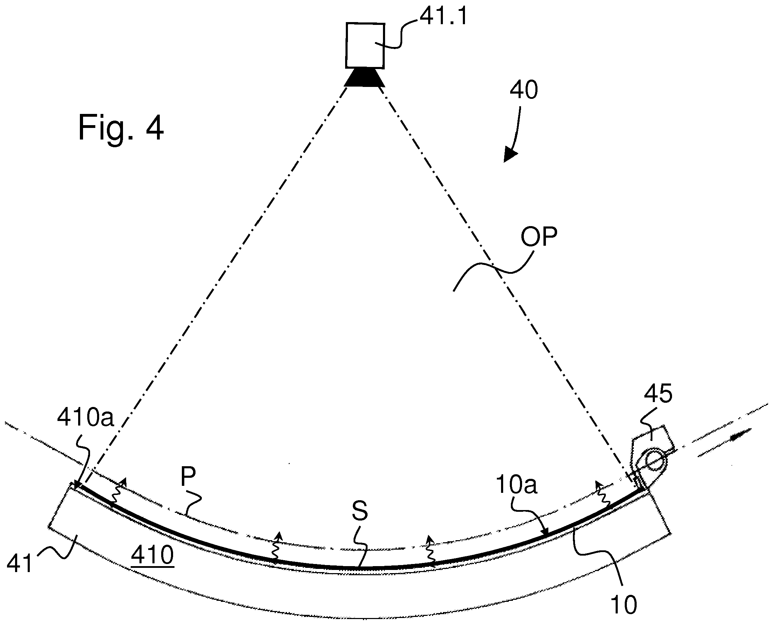

Figure 4 illustrates another embodiment of an inspection system, designated generally by reference numeral 40, for transmissive inspection of individual sheets S, which inspection system 40 makes use of a stationary guide member 41 disposed next to the path of the sheets S. In this example, the sheets S follow a trajectory corresponding to a curved segment of substantially constant radius. In this illustration, the sheets S are transported by means of a sheet gripper system with a plurality of spaced-apart gripper bars (as in the example of Figure 3), only one gripper bar 45 holding a leading edge of a sheet S being shown in Figure 4. As illustrated in Figure 4, the guide member 41 comprises a supporting member 410 which is shaped in this example as a curved plate of the desired curvature following the path of the sheets S.

As in the previous embodiment, a flexible light-emitting sheet 10 is disposed on an outer surface 410a of the supporting member 410 for direct or indirect support of the substrate material. A protective layer can similarly be provided on the light-emitting sheet 10 should this be necessary.

Reference numeral 41.1 in Figure 4 designates a camera, such as a black-and-white or colour camera comprising a CCD or CMOS array sensor (or like image sensor), for taking an image of the entire sheet S once it is positioned and entirely supported against the guide member 41, the camera 41.1 being located on the concave side of the guide member 41.

The particular configuration of the inspection system 40 of Figure 4 could follow the same design rules as described in International Publication No. WO 97/37329 A1 (see also US Patent No. US 6,111,261) with the difference that the resulting inspection system may be suitably used for carrying out transmissive inspection, rather than purely reflective inspection.

A line-scan camera could also be used in lieu of the array camera 41.1 of Figure 4, in which case the substrate material only needs to be supported (and illuminated) at the location where the line-scan camera acquires an image of the substrate material.

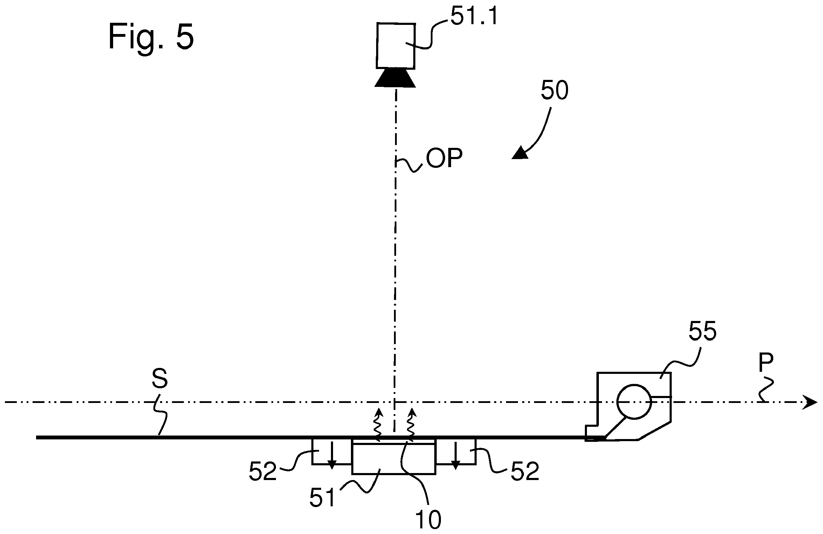

Such a variant is shown in Figure 5 where the line-scan camera is designated by reference numeral 51.1 and the relevant guide member by reference numeral 51. As illustrated, the guide member 51 can be entirely flat in this case as support and guidance of the substrate material only needs to be ensured in the region lying along the optical path OP of the camera 51.1. Reference numeral 52 in Figure 5 designates suction devices that are located on the upstream and downstream sides of the guide member 51 to additionally draw the sheet S by aspiration towards the guide member 51.

The use of a flexible light-emitting sheet as described above leads to a substantial simplification of the means necessary to carry out transmissive inspection as the flexible light-emitting sheet is sufficiently thin to be incorporated in any suitable way without taking too much space. This furthermore greatly simplifies the configuration of transmissive inspection systems as the flexible light-emitting sheet acting as light source can be directly integrated into the necessary means that are typically required to ensure a proper support and guidance of the substrate material to be inspected.

In addition, flexible light-emitting sheets as described above can be exploited to achieve better integration of various types of inspections. It can for instance be contemplated to use a flexible light-emitting sheet as described above with emission properties with a first spectrum (such as in the infrared (IR) or near-infrared (NIR) spectrum) in order to inspect transmissive properties of the substrate material within the first spectrum, while carrying out at the same time an inspection of features on the exposed side of the substrate material using a conventional reflective-type inspection system having a second spectrum that is not influenced by the first spectrum (such as in the ultraviolet (UV) spectrum).

In the embodiments of Figures 2A-B and 3 where line-scan cameras are used and where the light-emitting sheet 10 rotates together with the associated supporting element, it can also be contemplated to design the light-emitting sheet 10 is such a way that it is addressable line-wise and be activated only in the relevant portion of the light-emitting sheet 10 which lies in front of the optical path OP of the relevant camera. In such a case, a selected transverse portion of the light-emitting sheet 10 could be activated so as to continuously illuminate only the portion of the substrate material lying in front of the line-scan camera, which selected transverse portion would move in synchronism with the rotating drum or cylinder 22 or 31 as it rotates and transports the substrate material in front of the line-scan camera 22.1 or 31.1.

A device comprising the above-described flexible light-emitting sheet could conveniently be located upstream of a processing or printing unit of a processing or printing press (especially at the feeding location) to control quality and/or integrity of the substrate material before it is fed to the downstream-located processing or printing unit. The device could also be located downstream of a processing or printing unit of a processing or printing press to control quality and/or integrity of the processed or printed substrate material.

While the flexible light-emitting sheet can be suitably used as light source as described above, the light-emitting sheet could also be used in a sheet-fed or web-fed processing system, such as in a sheet-fed or web-fed processing or printing press, as drying or curing element for drying or curing inks, varnishes, coatings and the like applied on the substrate material. In such a case, the flexible light-emitting sheet would more specifically be designed to produce radiation in the infrared (IR) spectrum and/or in the ultraviolet (UV) spectrum.

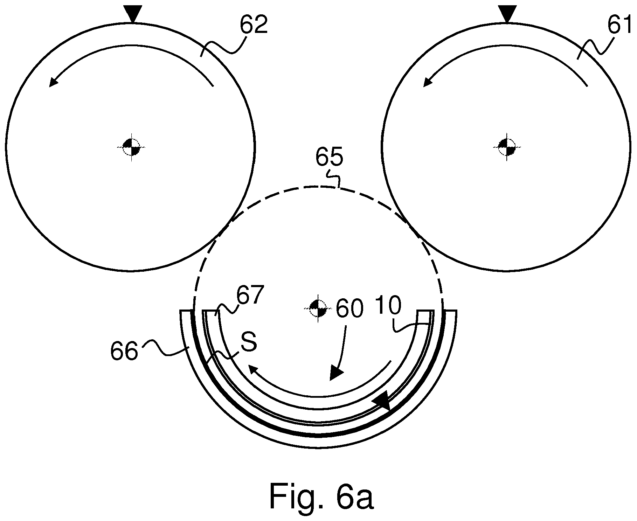

Figure 6a shows a possible embodiment making use of a flexible light-emitting sheet 10 as drying or curing element for drying sheets between printing units of a printing press. Reference numerals 61, 62 in Figure 6a designate first and second impression cylinders of distinct printing units (the associated forme cylinders and inking units having been omitted), while reference numeral 65 designates a sheet-transfer system for transferring the sheet from one impression cylinder 61 to the next 62. Sheets are transported in succession by the first impression cylinder 61, the sheet-transfer system 65 and the second impression cylinder 62 as indicated by the arrows in the drawings, each sheet being provided with impressions on a upper side thereof as illustrated by the black triangles.

Figure 6a further shows a guide member 66 disposed below the path of the sheet S and a drying or curing system 60 comprising curved supporting element 67 that is disposed above the path of the sheet S. This supporting element 67 bears on its convex side oriented towards the sheet S a flexible light-emitting sheet 10 which acts in this example as drying or curing element. According to this example, the light-emitting sheet 10 does not contact the upper side of the sheet S and is located at a distance from this upper side to prevent smearing of the freshly printed ink.

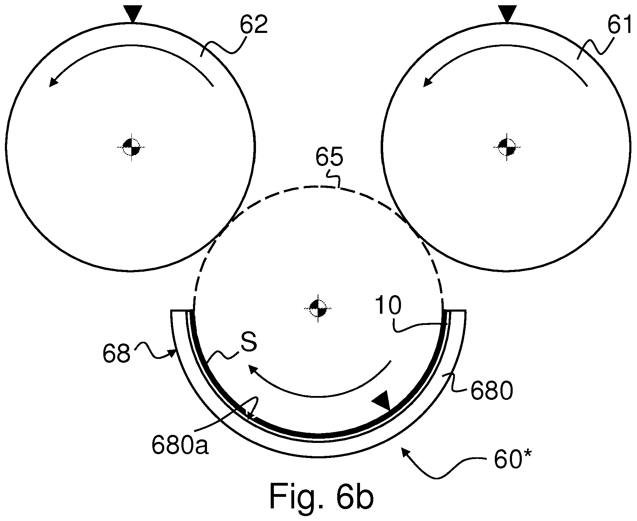

Figure 6b shows a variant of Figure 6a where the drying or curing system 60* is located below the path of the sheet S and comprises a curved supporting element 68 with a supporting member 680 whose concave surface 680a bears the flexible light-emitting sheet 10. In this other example, the supporting element 68 acts as guide and support for the substrate material and contacts the lower side of the sheets opposite to the side which bears the freshly printed ink. Drying or curing is carried out in this variant by irradiating the substrate material from the lower side.

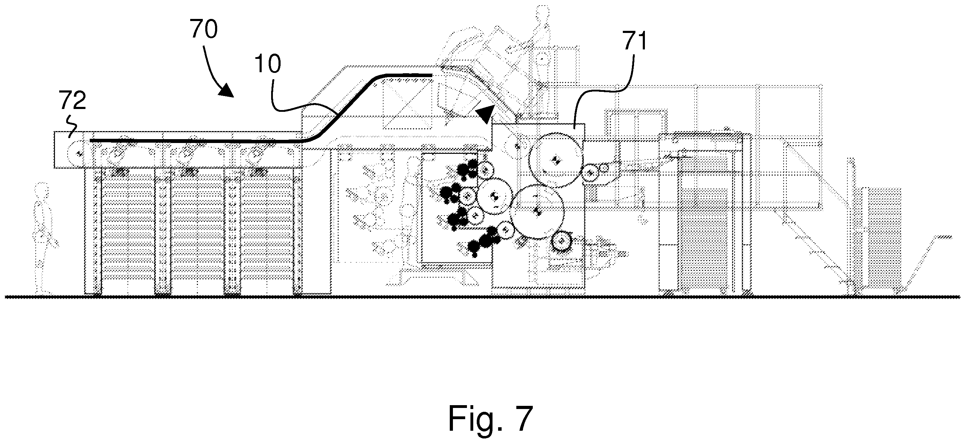

Figure 7 shows a sheet-fed printing press (here depicted as an intaglio printing press) equipped with a drying or curing system 70 comprising one or more flexible light-emitting sheets 10 that are located along the path of the printed sheets between the printing unit 71 and the delivery unit 72 of the printing press. The flexible light-emitting sheets 10 could be disposed below or above the path of the sheets as discussed in relation with Figures 6A-B, it being however understood that the freshly-printed side of the sheets (the lower side in the case of Figure 7) should not come into direct contact with any element to prevent smearing problems.

Various modifications and/or improvements may be made to the above-described embodiments without departing from the scope of the invention as defined by the annexed claims. For instance, while the invention was described in the context of the processing of substrate material in the form of individual sheets, the invention is equally applicable to the processing of substrate material in the form of webs.

In the context of the instant invention, OLED sheets are preferred over any other type of light-emitting sheet, in particular thanks to their ability to be formed as flexible sheets. This being said, it may alternatively be envisaged to design a suitably flexible light-emitting sheet in the form of a matrix arrangement of individual light emitting elements (such as individual LED elements) which, by way of an adequate arrangement of the individual elements one with respect to the others, may be mechanically flexible for the desired application, such as for instance for the purpose of being wrapped around a cylinder body as discussed above.

### LIST OF REFERENCES USED HEREIN

- 10: (flexible) light-emitting sheet / (e.g. bi-layer) OLED sheet
- 10a: surface of light-emitting sheet 10
- 11: first electrode (cathode (-)) of bi-layer OLED sheet
- 12: emission layer (of suitable light-emitting organic material) of bilayer OLED sheet
- 14: conductive layer (of suitable light-emitting organic material) of bilayer OLED sheet
- 15: second electrode (anode (+)) of bi-layer OLED sheet
- 20: inspection system for transmissive inspection (as well as rectoverso inspection) of substrate material
- 21: first (input) transfer drum or cylinder
- 22: first inspection drum or cylinder (transmissive inspection) / rotating drum or cylinder acting as supporting element for the substrate material
- 22.1: line-scan camera (transmissive inspection)
- 23: second inspection drum or cylinder (recto/front side inspection)
- 23.1: line-scan camera (recto/front side inspection)
- 24: third inspection drum or cylinder (verso/back side inspection)
- 24.1: line-scan camera (verso/back side inspection)
- 25: second (output) transfer drum or cylinder
- 30: inspection system for transmissive inspection of substrate material
- 31: rotating drum or cylinder (for transmissive inspection) / rotating drum or cylinder acting as supporting element for the substrate material
- 31a: pit of rotating drum or cylinder 31 for accommodating grippers / gripper bar 35
- 31.1: line-scan camera (transmissive inspection)
- 35: grippers / gripper bar of sheet gripper system for holding leading edge of successive sheets
- 40: inspection system for transmissive inspection of substrate material
- 41: stationary guide member for supporting the substrate material
- 41.1: array camera (transmissive inspection)
- 45: grippers / gripper bar of sheet gripper system for holding leading edge of successive sheets
- 50: inspection system for transmissive inspection of substrate material
- 51: stationary guide member for supporting the substrate material
- 51.1: line-scan camera (transmissive inspection)
- 52: suction devices
- 55: grippers / gripper bar of sheet gripper system for holding leading edge of successive sheets
- 60: drying or curing system
- 60*: drying or curing system
- 61: (first) impression cylinder
- 62: (second) impression cylinder
- 65: sheet-transfer system for transfer of successive sheets between impression cylinders 61, 62
- 66: supporting element for assisting transfer of sheets by the sheet-transfer system 65
- 67: supporting element for light-emitting sheet 10 acting as drying/curing element
- 68: supporting element for assisting transfer of sheets by the sheet-transfer system 65 / supporting element for light-emitting sheet 10 acting as drying/curing element
- 70: drying or curing system
- 71: printing unit of printing press (e.g. sheet-fed intaglio printing press)
- 72: delivery unit of printing press (e.g. sheet-fed intaglio printing press)
- 220: cylindrical body (of first inspection drum or cylinder 22)
- 220a: circumferential surface of cylindrical body 220
- 310: cylindrical body (of inspection drum or cylinder 31)
- 310a: circumferential surface of cylindrical body 310
- 410: (fixed) supporting member (e.g. support plate)
- 410a: surface of supporting member 410
- 680: (fixed) supporting member (e.g. support plate)
- 680a: surface of supporting member 410
- S: substrate material (e.g. sheet)
- P: path of grippers (e.g. grippers 35, 45, 55)
- OP: optical path of camera (e.g. cameras 22.1, 31.1, 41.1. 51.1)

## Claims

1. Device for irradiating substrate material (S) in the form of a sheet or web in a sheet-fed or web-fed processing system, especially in a sheet-fed or web-fed processing or printing press, **characterized in that** the device comprises at least one flexible light-emitting sheet (10) for producing radiation of a desired wavelength or wavelength band, which flexible light-emitting sheet (10) is disposed along a path of the substrate material (S) to subject the substrate material (S) to the radiation,
wherein the at least one flexible light-emitting sheet (10) is disposed on the surface of a supporting element (22; 31; 41; 51; 68) next to the path of the substrate material (S),
and the supporting element (22; 31; 41; 51; 68) acts as guide and support for the substrate material (S).

2. Device according to claim 1, wherein the at least one flexible light-emitting sheet (10) is an organic light-emitting device (OLED) sheet.

3. Device according to claim 2, wherein the OLED sheet (10) comprises one or more layers or films of organic materials (12, 14) situated between two electrode sheets (11, 15) and forming a single flexible sheet element.

4. Device according to any one of claims 1 to 3, wherein the supporting element is a stationary guide member (41; 51; 68) for supporting the substrate material (S) over at least a portion thereof, which stationary guide member (41; 51; 68) comprises a supporting member (410; 680) with a surface (410a; 680a), and wherein the at least one flexible light-emitting sheet (10) is disposed on the surface (410a; 680a) of the supporting member (410; 680) for direct or indirect support of the substrate material (S).

5. Device according to any one of claims 1 to 3, wherein the supporting element is a rotating drum or cylinder (22; 31) for supporting the substrate material (S) over at least a portion thereof, which rotating drum or cylinder (22; 31) comprises a cylindrical body (220; 310) with a circumferential surface (220a; 310a), and wherein the at least one flexible light-emitting sheet (10) is disposed on the circumferential surface (220a; 310a) of the cylindrical body (220; 310) for direct or indirect support of the substrate material (S).

6. Device according to any one of the preceding claims, wherein a protective layer is provided on top of the at least one flexible light-emitting sheet (10).

7. Device according to any one of the preceding claims, wherein the at least one flexible light-emitting sheet (10) is designed to produce radiation in the infrared (IR) spectrum, in the ultraviolet (UV) spectrum, and/or in the visible light spectrum.

8. Device according to any one of the preceding claims, wherein the at least one flexible light-emitting sheet (10) acts as a light source for illumination of the substrate material (S), especially for inspection of the quality and/or integrity of the substrate material (S), in particular as a light source for transmissive inspection of the substrate material (S).

9. Device according to any one of claims 1 to 3, wherein the at least one flexible light-emitting sheet (10) is designed to produce radiation in the infrared (IR) spectrum and/or in the ultraviolet (UV) spectrum and acts as drying or curing element for drying or curing inks, varnishes, coatings and the like applied on the substrate material (S).

10. Sheet-fed or web-fed processing system comprising a device according to any one of the preceding claims.

11. Inspection system (20; 30; 40; 50) for a sheet-fed or web-fed processing system, comprising a device according to claim 8.

12. Drying or curing system (60; 60*; 70) for a sheet-fed or web-fed processing system, comprising a device according to claim 9.

13. Use of the device of any one of claims 1 to 3 as light source for the inspection of the quality and/or integrity of the substrate material (S), in particular as light source for transmissive inspection of the substrate material (S), or as drying or curing element for drying or curing inks, varnishes, coatings and the like applied on the substrate material (S).

14. Use according to claim 13, wherein the flexible light-emitting sheet (10) is an organic light-emitting device (OLED) sheet.

15. Use according to claim 14, wherein the OLED sheet (10) comprises one or more layers or films of organic materials (12, 14) situated between two electrode sheets (11, 15) and forming a single flexible sheet element.

## Patentansprüche

1. Vorrichtung zum Bestrahlen von Substratmaterial (S) in Form einer Folie oder eines Bands in einem Folien- oder Band-Verarbeitungssystem, besonders in einer Folien- oder Band-Verarbeitungs- oder Druckpresse, **gekennzeichnet dadurch, dass** die Vorrichtung mindestens eine flexible lichtemittierende Folie (10) zur Erzeugung von Strahlung einer gewünschten Wellenlänge oder einem Wellenlängenband umfasst, deren flexible lichtemittierende Folie (10) entlang einer Bahn des Substratmaterials (S) angeordnet ist, um das Substratmaterial (S) der Strahlung zu unterziehen,
wobei die mindestens eine flexible lichtemittierende Folie (10) auf der Oberfläche eines tragenden Elements (22; 31; 41; 51; 68) neben der Bahn des Substratmaterials (S) angeordnet wird,
und das tragende Element (22; 31; 41; 51; 68) als Führung und Träger für das Substratmaterial (S) agiert.

2. Vorrichtung nach Anspruch 1, wobei die wenigstens eine flexible lichtemittierende Folie (10) eine organische Licht emittierende Vorrichtungs (OLED)-Folie ist.

3. Vorrichtung nach Anspruch 2, wobei die OLED-Folie (10) eine oder mehrere Schichten oder Filme aus organischen Stoffen (12, 14) umfasst, die sich zwischen zwei Elektrodenplatten (11, 15) befinden und die einzelnes flexibles Folienelement bilden.

4. Vorrichtung nach einem der Ansprüche 1 bis 3, wobei das tragende Element ein stationäres Führungselement (41; 51; 68) zum Tragen des Substratmaterials (S) über mindestens einen Teil hiervon ist, wobei das stationäre Führungselement (41; 51; 68) ein tragendes Element (410; 680) mit einer Oberfläche (410a, 680a) umfasst, und wobei die mindestens eine lichtemittierende Folie (10) auf der Oberfläche (410a; 680a) des tragenden Elements (410; 680) für die direkte oder indirekte Unterstützung des Substratmaterials (S) angeordnet ist.

5. Vorrichtung nach einem der Ansprüche 1 bis 3, wobei das tragende Element eine rotierende Trommel oder ein Zylinder (22; 31) zur Unterstützung des Substratmaterials (S) über mindestens einen Teil hiervon ist, wobei die rotierende Trommel oder der Zylinder (22; 31) einen zylindrischen Körper (220; 310) mit einer Umfangsoberfläche (220a; 310a) umfasst und wobei die mindestens eine flexible lichtemittierende Folie (10) auf der Umfangsoberfläche (220a; 310a) des zylindrischen Körpers (220; 310) für die direkte oder indirekte Unterstützung des Substratmaterials (S) angeordnet ist.

6. Vorrichtung nach einem der vorhergehenden Ansprüche, wobei eine Schutzschicht auf der Oberfläche der mindestens einen flexiblen lichtemittierenden Folie (10) vorgesehen ist.

7. Vorrichtung nach einem der vorhergehenden Ansprüche, wobei die mindestens eine flexible lichtemittierende Folie (10) dazu ausgelegt ist, Strahlung im Infrarot (IR)-spektrum, im ultravioletten (UV) Spektrum, und/oder im sichtbaren Lichtspektrum zu erzeugen.

8. Vorrichtung nach einem der vorhergehenden Ansprüche, wobei die mindestens eine flexible lichtemittierende Folie (10) als Lichtquelle zur Beleuchtung des Substratmaterials (S) dient, vor allem für die Kontrolle der Qualität und/oder der Integrität des Substratmaterials (S), insbesondere als Lichtquelle für die lichtdurchlässige Kontrolle des Substratmaterials (S).

9. Vorrichtung nach einem der Ansprüche 1 bis 3, wobei die mindestens eine flexible lichtemittierende Folie (10) dazu ausgelegt ist, Strahlung im Infrarot (IR)-spektrum und/oder im ultravioletten (UV) Spektrum zu erzeugen und als trocknendes oder härtendes Element für das Trocknen oder Härten von auf das Substratmaterial (S) aufgetragene Tinten, Lacken, Beschichtungen und dergleichen dient.

10. Folien- oder Band-Verarbeitungssystem umfassend eine Vorrichtung nach einem der vorangehenden Ansprüche.

11. Kontrollsystem (20; 30; 40; 50) für ein Folien- oder Band-Verarbeitungssystem, umfassend eine Vorrichtung nach Anspruch 8.

12. Trocknungs- oder Härtungssystem (60; 60*; 70) für ein Folien- oder Band-Verarbeitungssystem, umfassend eine Vorrichtung nach Anspruch 9.

13. Verwendung der Vorrichtung nach einer der Ansprüche 1 bis 3 als Lichtquelle für die Kontrolle der Qualität und/oder Integrität des Substratmaterials (S), insbesondere als Lichtquelle für die lichtdurchlässige Kontrolle des Substratmaterials (S), oder als trocknendes oder härtendes Element für das Trocknen und Härten von auf das Substratmaterial (S) aufgetragene Tinten, Lacken, Beschichtungen und dergleichen.

14. Verwendung nach Anspruch 13, wobei die flexible licht- emittierende Folie (10) eine organische Licht emittierende Vorrichtungs (OLED)-Folie ist.

15. Verwendung nach Anspruch 14, wobei die OLED-Folie (10) eine oder mehrere Schichten oder Filme organischer Materialien (12, 14) umfasst, die sich zwischen zwei Elektrodenplatten (11, 15) befinden und die ein einzelnes flexibles Folienelement bilden.

## Revendications

1. Dispositif pour irradier un matériau de substrat (S) sous la forme d'une feuille ou d'une bande dans un système de traitement alimenté en feuille ou en bande, en particulier dans une presse de traitement ou d'impression alimentée en feuille ou en bande, **caractérisé en ce que** le dispositif comprend au moins une feuille électroluminescente flexible (10) pour produire un rayonnement d'une longueur d'onde ou bande de longueur d'onde souhaitée, laquelle feuille électroluminescente flexible (10) est disposée le long d'un trajet du matériau de substrat (S) pour soumettre le matériau de substrat (S) au rayonnement,
dans lequel l'au moins une feuille électroluminescente flexible (10) est disposée sur la surface d'un élément de support (22 ; 31 ; 41 ; 51 ; 68) à proximité du trajet du matériau de substrat (S),
et l'élément de support (22 ; 31 ; 41 ; 51 ; 68) agit en tant que guide et support pour le matériau de substrat (S).

2. Dispositif selon la revendication 1, dans lequel l'au moins une feuille électroluminescente flexible (10) est une feuille de dispositif électroluminescent organique (OLED).

3. Dispositif selon la revendication 2, dans lequel la feuille OLED (10) comprend un(e) ou plusieurs couches ou films de matériaux organiques (12, 14) situé(e)s entre deux feuilles d'électrode (11, 15) et formant un élément feuille flexible unique.

4. Dispositif selon l'une quelconque des revendications 1 à 3, dans lequel l'élément de support est un organe de guidage stationnaire (41 ; 51 ; 68) pour supporter le matériau de substrat (S) sur au moins une portion de celui-ci, lequel organe de guidage stationnaire (41 ; 51 ; 68) comprend un organe de support (410 ; 680) avec une surface (410a ; 680a), et dans lequel l'au moins une feuille électroluminescente flexible (10) est disposée sur la surface (410a ; 680a) de l'organe de support (410 ; 680) pour un support direct ou indirect du matériau de substrat (S).

5. Dispositif selon l'une quelconque des revendications 1 à 3, dans lequel l'élément de support est un tambour ou cylindre rotatif (22 ; 31) pour supporter le matériau de substrat (S) sur au moins une portion de celui-ci, lequel tambour ou cylindre rotatif (22; 31) comprend un corps cylindrique (220; 310) avec une surface circonférentielle (220a ; 310a), et dans lequel l'au moins une feuille électroluminescente flexible (10) est disposée sur la surface circonférentielle (220a ; 310a) du corps cylindrique (220 ; 310) pour un support direct ou indirect du matériau de substrat (S).

6. Dispositif selon l'une quelconque des revendications précédentes, dans lequel une couche de protection est fournie sur l'au moins une feuille électroluminescente flexible (10).

7. Dispositif selon l'une quelconque des revendications précédentes, dans lequel l'au moins une feuille électroluminescente flexible (10) est conçue pour produire un rayonnement dans le spectre infrarouge (IR), dans le spectre ultraviolet (UV), et/ou dans le spectre de lumière visible.

8. Dispositif selon l'une quelconque des revendications précédentes, dans lequel l'au moins une feuille électroluminescente flexible (10) agit en tant que source de lumière pour l'éclairage du matériau de substrat (S), particulièrement pour l'inspection de la qualité et/ou de l'intégrité du matériau de substrat (S), en particulier en tant que source de lumière pour l'inspection de la transparence du matériau de substrat (S).

9. Dispositif selon l'une quelconque des revendications 1 à 3, dans lequel l'au moins une feuille électroluminescente flexible (10) est conçue pour produire un rayonnement dans le spectre infrarouge (IR) et/ou dans le spectre ultraviolet (UV) et agit en tant qu'élément de séchage ou de durcissement pour sécher ou durcir des encres, des vernis, des revêtements et analogues appliqués sur le matériau de substrat (S).

10. Système de traitement alimenté en feuille ou en bande comprenant un dispositif selon l'une quelconque des revendications précédentes.

11. Système d'inspection (20 ; 30 ; 40 ; 50) pour un système de traitement alimenté en feuille ou en bande, comprenant un dispositif selon la revendication 8.

12. Système de séchage ou de durcissement (60 ; 60* ; 70) pour un système de traitement alimenté en feuille ou en bande, comprenant un dispositif selon la revendication 9.

13. Utilisation du dispositif selon l'une quelconque des revendications 1 à 3 en tant que source de lumière pour l'inspection de la qualité et/ou de l'intégrité du matériau de substrat (S), en particulier en tant que source de lumière pour l'inspection de la transparence du matériau de substrat (S), ou en tant qu'élément de séchage ou de durcissement pour sécher ou durcir des encres, des vernis, des revêtements et analogues appliqués sur le matériau de substrat (S).

14. Utilisation selon la revendication 13, dans lequel la feuille électroluminescente flexible (10) est une feuille de dispositif électroluminescent organique (OLED).

15. Utilisation selon la revendication 14, dans lequel la feuille OLED (10) comprend un(e) ou plusieurs couches ou films de matériaux organiques (12, 14) situé(e)s entre deux feuilles d'électrode (11, 15) et formant un élément feuille flexible unique.
